# EUROPÄISCHE PATENTSCHRIFT

(11) **EP 1 927 867 B1**
(45) Veröffentlichungstag und Bekanntmachung des Hinweises auf die Patenterteilung: **04.04.2012**
(21) Anmeldenummer: 06024979.4
(22) Anmeldetag: 02.12.2006
(51) Int. Cl.: G01S 17/02, G01S 17/42, G01S 17/87, G01S 17/48, F16P 3/14

(54) **Optoelektronischer Mehrebenensensor und Verfahren zur Erfassung von Objekten**
Optoelectronic multiple plane sensor and method for detecting objects
Capteur optoélectronique à plusieurs plans et procédé de détection d'objets

(43) Veröffentlichungstag der Anmeldung: 04.06.2008
(73) Patentinhaber: SICK AG, 79183 Waldkirch (DE)
(72) Erfinder: Plasberg, Georg Dr., 79353 Bahlingen (DE); Wüstefeld, Martin, 79350 Sexau (DE)
(74) Vertreter: Ludewigt, Christoph

(56) Entgegenhaltungen:
- EP-A- 1 548 351
- EP-A1- 0 913 707
- EP-B1- 1 442 319
- CH-A5- 641 583
- DE-A1- 19 815 149
- DE-A1- 19 919 925
- DE-A1-102005 050 824
- US-A1- 2004 066 500
- US-B1- 6 441 363

## Beschreibung

Die Erfindung betrifft einen optoeiektronischen Sensor sowie ein Verfahren zur Erfassung von Objekten nach den Oberbegriffen von Anspruch 1 beziehungsweise Anspruch 32.

Eine automatisierte Überwachung eines Raumbereichs wird in einer Vielzahl von Anwendungen benötigt. Hierzu zählen beispielsweise Diebstahlsicherung, Automatisierungstechnik oder Sicherheitstechnik. Gerade zum Betrieb oder zur Absicherung von Maschinen muss regelmäßig die Anwesenheit eines Gegenstands oder Körperteils, häufig auch die Position eines solchen Gegenstands, innerhalb eines näherungsweise kubischen Raumes erkannt werden.

Für die Überwachung eines dreidimensionalen Raumes wurden in der Vergangenheit eine Anzahl von Lösungen vorgeschlagen. Jede dieser Lösungen hat aber individuelle Schwächen, welche den Anwendungsbereich begrenzen.

So ist bekannt, den Raumbereich mit einer Kamera zu überwachen und beispielsweise das Bild dieser Kamera mit einem Referenzbild zu vergleichen, um auf Veränderungen in dem Raumbereich, wie beispielsweise das Eindringen von Objekten, reagieren zu können. Eine Weiterentwicklung solcher Lösungen ist die Aufnahme eines dreidimensionalen Kamerabildes. Dazu kann eine Doppelkamera und eine stereoskopische Auswertung verwendet werden, wie beispielsweise in der US 6,297,844 B1 offenbart.

Neben dem verhältnismäßig hohen Rechenaufwand bei derartigen stereoskopischen Verfahren hat diese Herangehensweise den Nachteil, dass die Überwachung aus einem Punkt heraus erfolgt. Dabei entsteht ein pyramiden- oder kegelförmiges Überwachungs-, beziehungsweise Messfeld. Ein kubischer Raumbereich innerhalb dieses Überwachungsfeldes schafft erhebliche Auswertungsprobteme. Außerdem können sich in dem Überwachungsraum Gegenstände (Paletten, Messköpfe oder dergleichen) befinden oder in ihn hineinragen. In deren Kernschatten entsteht dann ein großer, nicht überwachbarer Bereich.

Eine andere herkömmliche Lösung ist in der DE 197 57 848 C2 offenbart. Dort wird ein Laserscanner über ein System von Spiegeln und Blenden so abgelenkt, dass er mehrere Ebenen überstreicht. In einer besonderen Ausführungsform sind mehrere Scanlaser vorgesehen, die nebeneinander liegen und derart über einen Spiegel geführt werden, dass eine Mehrzahl parallel zueinander beabstandeter Scanebenen entsteht. Nachteilig an dieser Lösung ist, dass bewegliche mechanische Teile, nämlich der drehende Scanlaser, kostenaufwändig und anfällig sind. Darüber hinaus müssen die Ebenen recht nahe beieinander liegen, da die mehreren Scanlaser ansonsten zu schwer und für eine schnelle Drehung zu träge werden. Eine echte Raumüberwachung, die über eine enge Umgebung einer Ebene hinausgeht, ist damit nicht möglich.

Es ist weiter bekannt, für eine abzusichernde Maschine eine Art Käfig aus mehreren Lichtgittem oder Scannern zu bilden. Dabei stehen zum Beispiel Lichtgittersäulen an den vier Ecken eines Quadrates und spannen somit die Seitenflächen eines Quaders auf. Der offensichtliche Nachteil hieran ist, dass mehrere Lichtgittersäulen benötigt werden. Diese behindern die Arbeit an der geschützten Maschine und verursachen höhere Kosten.

Schließlich ist eine Anzahl von Lösungen bekannt, eine einzelne Ebene zu überwachten. Das kann ein Lichtgitter, ein Laserscanner oder auch ein Triangulationssensor mit Kameraelement sein. Denkbar ist auch, einen entfernungsmessenden Bildsensor einzusetzen. Diese Sensoren können selbstverständlich nur eine Fläche und keinen Raum überwachen. Beispiele für derartige Sensoren sind in der DE 101 10 420 A1, der DE 10 2006 012 351 U1, der EP 1 548 351 A2, der EP 1 174 733 A2 oder der DE 102 29 408 A1 offenbart.

Die DE 199 19 925 A1 offenbart eine Anordnung zur gleichzeitigen Messung der Geschwindigkeit sowie der Oberflächengestalt von bewegten Objekten. Dabei werden mit Halbleitersensorzeilen hintereinander aufgenommene Querschnittsprofile eines Fahrzeugs in Querschnittsflächen und Längsprofile umgerechnet. Durch eine zweite, zur ersten beabstandete Halbleitersensorzeile kann eine zeitversetzte identische Aufnahme und hieraus die Geschwindigkeit ermittelt werden. Eine sicherheitstechnische Anwendung ist in der Schrift nicht angesprochen.

Aus der CH 641 583 A5 ist ein Scanner zur Raumüberwachung mit Wam- und Schutzzonen bekannt, der einen einzelnen Detektor sowie eine Ablenkeinheit aus Spiegeln oder Prismen aufweist, um einen Überwachungsbereich abzutasten. Aus vordefinierten Zonen und im Betrieb abgetasteten Entfernungswerten werden Menschen durch typische Parameter identifiziert und ein Störalarm oder eine andere Sicherungsmaßnahme mittels Scheinwerfer oder Schusswaffe ausgelöst, wenn ein Mensch, also ein Eindringling, erkannt ist.

In der DE 10 2005 050 824 A1 wird die Durchgriffsöffnung zu einer Druckmaschine durch einen Radar, ein Lichtgitter oder eine 3D-Kamera abgesichert, welche die Position des Eingriffs bestimmen können.

Aus der US 6,441,363 B1 ist ein Sensor bekannt, welcher für eine Airbagsteuerung die Position einer Person in einem Fahrzeugsitz überwacht. Der Sensor ist dreigeteilt und nimmt so jeweils Profildaten der Person aus einem Kopf-, Rumpf-und Beinbereich aus. Diese Profildaten werden gemeinsam ausgewertet, um auf die Position zu schließen und dementsprechend die Kraft zu steuern, mit welcher der Airbag ausgelöst wird, oder diesen zu deaktivieren.

In der DE 10 2005 003 827 A1 sind vor einem Roboterarbeitsplatz zwei Laserscanner angeordnet, welche in unterschiedlichem Abstand eine Überwachungsebene aufspannen. Greift eine Person in die weiter entfernte Ebene ein, so wird der Roboter in einen Standby-Modus versetzt. Greift die Person auch noch in die näher liegende Ebene ein, so kann der Roboter nur so lange im Standby verharren, wie er einen Tastschalter betätigt und damit bestätigt, dass ein sicherer Betriebszustand besteht. Fehlt in dieser Situation das Signal des Tastschalters, erzeugt dies einen sofortigen Notaus. Das System erreicht so, dass bei noch unkritischen Eingriffen die Absicherung durch Standby genügt und die Verfügbarkeit damit gesteigert wird, weil nach Beendigung des Eingriffs aus dem Standby im Gegensatz zum Notaus schnell und ohne Freigabe durch eine autorisierte Person die Arbeit des Roboters fortgesetzt werden kann.

In der WO 2006/1265891 wird ein Arbeitsplatz von einer Reihe von Laserscannern abgesichert, deren Überwachungsebenen einen zuvor üblichen physischen Sicherheitszaun ersetzen.

Es ist daher Aufgabe der Erfindung, einen zuverlässigen Sensor zur Überwachung eines dreidimensionalen Raumbereichs anzugeben, dessen Überwachungsfunktion von Gegenständen in dem Raumbereich und umgekehrt der Raumbereich von dem Sensor selbst möglichst ungestört bleibt.

Diese Aufgabe wird durch einen Sensor und ein Verfahren zur Erfassung von Objekten in einem Raumbereich gemäß Anspruch 1 beziehungsweise Anspruch 28 gelöst. Die erfindungsgemäße Lösung hat den Vorteil, dass ein Raumbereich mit durch die Anzahl der Ebenen einstellbarer Genauigkeit überwacht werden kann, ohne dass eine Abschattung eines Bildsensors dazu führt, weite Teilbereiche nicht mehr erkennen zu können. Somit können Gegenstände unter Erhaltung der Funktionsfähigkeit des Sensors berücksichtigt werden, die in dem überwachten Raumbereich vorhanden sind und vorhanden sein sollen. Der Sensor ist kompakt und lässt den Randbereich des überwachten Bereichs anders als eine Vielzahl von Lichtgittern oder Scannern weitgehend frei. Außerdem ist der Sensor kostengünstig herzustellen und benötigt gegenüber der Beobachtung eines Raumbereichs nur deutlich einfachere und zuverlässigere Auswertungsverfahren.

Die Erfindung geht dabei von der Grundidee aus, bekannte kostengünstige Flächensensoren zu erweitern. Mit einer Vervielfältigung und geeigneten Anordnung solcher Sensoren wird auch die Überwachung eines dreidimensionalen Raumbereichs ermöglicht.

Bevorzugt sind die Bildsensoren so angeordnet, dass die Ebenen untereinander überlappungsfrei und im Wesentlichen parallel zueinander sind oder voneinander fächerförmig von den Bildsensoren ausgehend auseinander laufen. Mit dieser Anordnung lassen sich einerseits bei paralleler Ausrichtung quader- oder würfelförmige Bereiche auf einfache Weise überwachen und andererseits bei fächerförmigem Auseinanderlaufen ein überwachter Raumbereich einstellen, der mit zunehmender Nähe zum Sensor genauer überwacht wird.

Noch bevorzugter sind die Bildsensoren so angeordnet, dass je zwei Ebenen zumindest in einem Teilbereich des Überwachungsbereichs voneinander höchstens um einen jeweiligen vorgegebenen Abstand beabstandet sind. Damit lässt sich die gewünschte Objektauflösung des Sensors einstellen und daraus eine Balance zwischen Kosten für eine größere Vielzahl von Sensoren und Erkennungsgenauigkeit einstellen.

Noch bevorzugter beträgt der vorgegebene Abstand jeweils 7-10 mm zur Detektion von Fingern, 10-20 mm zu Detektion von Extremitäten oder 30-80 mm zur Detektion der unteren Extremitäten eines menschlichen Körpers. Dies sind typische Abstände für die Erfüllung einer Sicherheitsanforderung, die von der Anwendung abhängt.

Vorteilhafterweise sind die Bildsensoren auf einer Geraden oder einer Kurve aufgereiht angeordnet. Das ermöglicht in dem einen Fall den Aufbau eines einfachen, geraden Sensors und in dem anderen Fall die Anpassung des Sensors an die Geometrie seines Anbringungsortes beziehungsweise des zu überwachenden Raumbereichs.

Bevorzugt ist jedem Bildsensor eine Lichtquelle zugeordnet, insbesondere ein Laser oder eine LED. Die Ausleuchtung des Raumbereichs ist nicht unbedingt durch das Umgebungslicht oder eine externe Beleuchtung sichergestellt. Darüber hinaus hat eine sensoreigene Lichtquelle bekannte Eigenschaften des ausgesandten Lichts, welche die Auswertung erleichtern oder sogar erst ermöglichen.

Noch bevorzugter ist die Lichtquelle eine Lichtquelle für sichtbares, infrarotes oder ultraviolettes Licht. Je nach Anwendungsbereich kann es vorteilhaft sein, die Beleuchtung zu sehen oder unsichtbar zu machen.

Vorteilhafterweise nehmen die Bildsensoren ein entfernungsaufgelöstes Pixelbild auf. Damit ist nicht mehr nur bekannt, ob ein Objekt in einer Ebene vorhanden ist, sondern auch wo. Damit lässt sich viel feiner klassifizieren, ob das Objekt in dem Überwachungsbereich erlaubt ist oder nicht.

Bevorzugt ist die Lichtquelle dafür ausgebildet, in die Ebene des zugehörigen Bildsensors ein strukturiertes Beleuchtungsmuster oder eine Beleuchtungslinie zu strahlen, insbesondere mittels eines in den Strahlengang der Lichtquelle eingebrachten diffraktiven optischen Elements und der Bildsensor kann die Entfernungen mittels Triangulation bestimmen. Mit einer solchen Lichtquelle ist ein entfernungsaufgelöstes Bild mit den bekannten Verfahren der Triangulation zuverlässig umsetzbar.

Alternativ können die Lichtempfangselemente der Bildsensoren die Entfernungen nach einem Lichtlaufzeitverfahren bestimmen. Dies ist ein anderes bekanntes und zuverlässiges Verfahren zur Entfernungsbestimmung. Somit können bekannte Bildsensoren eingesetzt werden.

Dabei können die Lichtquellen bevorzugt Lichtpulse aussenden und die Lichtempfangselemente die Pulslaufzeit bestimmen. Dies ist ein robustes und bekanntes Verfahren zur Bestimmung der Entfernung mit einem Lichtlaufzeitverfahren.

Alternativ senden die Lichtquellen ein intensitätsmoduliertes Licht aus und die Lichtempfangselemente können dessen Phasenverschiebung bestimmen. Dies ist ein weiteres robustes und bekanntes Licht auf Zeitverfahren. Bei einem herkömmlichen Bildsensor kann ein PMD (Photonmischdetektor) mit einer Ladungsschaukel in jedem Pixel eingesetzt werden, über deren Ladungsverhältnis die Phase des modulierten Messlichts und daraus die Lichtlaufzeit bestimmt wird.

Vorteilhafterweise ist der Sensor für die Überwachung eines Schutzbereichs ausgebildet, der Teilbereich des Überwachungsbereichs ist, indem die Steuerung jeder Ebene winkelabhängige Schutzbereich-Abstandsbedingungen zuweist und ein erfasstes Objekt als den Schutzbereich verletzend erkennt, wenn es die Schutzbereich-Abstandsbedingungen erfüllt. Mit solchen Abstandsbedingungen lässt sich in jeder Ebene eine Vielzahl von Geometrien für den Schutzbereich umsetzen und somit anwendungsspezifisch definieren, in welchen Teil des Überwachungsbereichs keine Objekte eindringen dürfen. Der Schutzbereich ist also nicht allein durch die Anordnung der Bildsensoren und äußere Begrenzungen festgelegt, sondern kann konfiguriert werden.

Dabei ist bevorzugt der Sensor für die Überwachung eines Warnbereichs ausgebildet, der als Teilbereich des Überwachungsbereichs den Schutzbereich umfasst, indem die Steuerung jeder Ebene winkelabhängige Warnbereich-Abstandsbedingungen zuweist und ein erfasstes Objekt als den Warnbereich verletzend erkennt, wenn es die Warnbereich-Abstandsbedingungen erfüllt. Für die Konfigurationsmöglichkeiten des Warnbereichs gilt dasselbe wie für den Schutzbereich. Der Warnbereich ermöglicht eine Abstufung, bei der ein Eindringen von Objekten eine mildere Reaktion hervorruft, als eine Schutzbereichsverletzung.

In einer Anwendung des Sensors zur Absicherung eines Gefahrenbereichs ist die Steuerung bevorzugt für die Abgabe eines Warnsignals ausgebildet, wenn der Warnbereich verletzt ist. So kann beispielsweise eine Verletzung des Warnbereichs lediglich ein Warnsignal verursachen, während eine Verletzung des Schutzbereichs unmittelbar zu einem Abschalten der geschützten Maschine führt.

Vorteilhafterweise sind die Schutzbereich-Abstandsbedingungen beziehungsweise die Warnbereich-Abstandsbedingungen in mehreren oder allen Ebenen in zumindest einem Winkelbereich gleich. Schutzbereich und Warnbereich müssen also nicht in jeder Ebene konfiguriert werden, sondern werden zwischen den Ebenen kopiert. Das erleichtert zum einen die Auswertung und Einrichtung, zum anderen können Begrenzungen des oder der Gegenstände im Überwachungsbereich, die mehrere Ebenen betreffen, auf einfache Weise berücksichtigt werden.

Dabei ist der Schutzbereich beziehungsweise der Warnbereich bevorzugt ein Würfel, ein Quader, ein Teilkegel, ein Teilzylinder oder ein würfelförmiger, quaderförmiger, teilkegelförmiger oder teilzylinderformiger Käfig. Solche Geometrien lassen sich über die Abstandsbedingungen leicht konfigurieren. Alternativ kann ein Teil der Geometrie durch eine äußere Begrenzung gegeben sein, etwa eine gemeinsame Kante.

Bevorzugt hat jeder Bildsensor einen Sichtwinkel von 90°. Das ist technisch leicht umsetzbar und geeignet für den wichtigen Fall eines quaderförmigen Überwachungsbereichs. Alternativ ist jedem Bildsensor eine Panoramaoptik zugeordnet und der Bildsensor hat somit einen Sichtwinkel von 360°. Damit kann der Bildsensor einen wesentlich größeren Überwachungsbereich aufnehmen.

Bevorzugt ist neben jedem Bildsensor mindestens ein weiterer zugeordneter Bildsensor derart angeordnet, dass sich die Sichtwinkel der einander zugeordneten Bildsensoren addieren. Dies ist eine Alternative zu einer verhältnismäßig kostenaufwändigen Panoramaoptik und ermöglicht beliebige Sichtwinkel des Sensors.

Vorteilhafterweise weist jeder Bildsensor einen CCD- oder einen CMOS-Chip mit mehreren Zeilen auf und in einer Einlernphase kann zur einfachen Justierung diejenige Zeile oder können diejenigen Zeilen für den Betrieb ausgewählt werden, welche die zugehörige Ebene überwacht. Die Kosten bei der Herstellung eines Bildsensors mit mehreren Zeilen gegenüber einem solchen mit nur einer Zeile sind nur geringfügig erhöht. Die Auswahl der richtigen Zeile in einer Einlernphase erhöht die Bedienerfreundlichkeit bei der Justage erheblich.

Bevorzugt ist den Lichtempfangselementen eines jeden Bildsensors eine gemeinsame Optik zugeordnet. Diese hat eine hohe Lichtausbeute und ermöglicht, den Überwachungsbereich geeignet auf dem Bildsensor abzubilden.

Alternativ ist Gruppen von Lichtempfangselementen jedes Bildsensors eine Mikrooptik zugeordnet und Bildsensor und Mikrooptiken bilden als ein Bauteil ein gemeinsames Modul. Die Mikrooptiken leiten jeweils etwas weniger Licht auf ein Lichtempfangselement, ermöglichen aber eine wesentlich kompaktere und preisgünstigere Bauweise.

Vorteilhafterweise sind mehrere Bildsensoren oder mehrere gemeinsame Module auf einem gemeinsamen Baugruppenträger angeordnet. Dies ermöglicht eine einfache, kostengünstige und gemeinsame Herstellung der Bildsensoren.

Bevorzugt weisen dabei die Steuerung, die Bildsensoren und die Lichtquellen eine gemeinsame Energieversorgung auf. Auch damit kann der Sensor als Ganzes kompakter gebaut und angeschlossen werden.

Vorteilhafterweise ist eine gemeinsame Steuerung für mehrere oder für alle Bildsensoren vorgesehen. Dies ermöglicht erneut eine kompaktere Bauweise und eine Kostenersparnis.

Dabei ist die gemeinsame Steuerung bevorzugt dafür ausgebildet, eine Objekterfassung durch mehrere Bildsensoren in unterschiedlichen Ebenen zu einer geometrischen Objektklassifizierung zusammenzufassen und nur bestimmte Objektklassen als Gefährdung zu werten. Es gibt Gegenstände wie Paletten oder Arbeitsgeräte, die in dem Überwachungsbereich vorhanden sind und sein dürfen und die in mehreren Ebenen erkannt werden. Die gemeinsame Steuerung ermöglicht dann, auch solche Objekte zu klassifizieren und gegebenenfalls nicht auf sie zu reagieren.

Bevorzugt ist die gemeinsame Steuerung dafür ausgebildet, Objekterfassungen durch mehrere Bildsensoren für eine Klassifizierung der Lage von Objekten zueinander sowie deren zeitliche Veränderung als Bewegung zusammenzufassen und bestimmte Objektlagen oder Bewegungen als Gefährdung zu werten. Beispielsweise kann ein Roboter neben Bedienpersonal unbedenklich sein, wird aber gefährlich, wenn er sich mit einer zu großen Geschwindigkeit dem Bedienpersonal nähert. Erst im letzteren Falle soll der Sensor reagieren. Ebenso kann eine Gefahrenquelle in einem gewissen Abstand zum Bedienpersonal zum gewöhnlichen Ablauf gehören, muss bei Unterschreitung eines Abstandes aber zu einem Erkennen einer Gefährdung führen.

In einer weiteren Ausführungsform der Erfindung sind kooperative Begrenzungen des Überwachungsbereichs vorgesehen und die Steuerung dafür ausgebildet, deren Bild beziehungsweise Entfernung als Funktionstest der Bildsensoren mit einem Referenzbild beziehungsweise Referenzentfernungen zu vergleichen. Wenn der Bildsensor nämlich "ins Leere" sieht, kann ansonsten nicht zwischen einer Fehlfunktion des Bildsensors und einem nach wie vor leeren Bild unterschieden werden. Die Funktionsfähigkeit des Bildsensors kann mithilfe der kooperativen Begrenzungen unabhängig von der Szenerie im Überwachungsbereich überprüft werden.

In einer weiteren Ausführungsform wird der Sensor mobil an einem Fahrzeug oder einem Roboter verwendet. Als Alternative zu einer statischen Aufstellung des Sensors können somit zum Beispiel Hindernisse oder Personen im Fahrweg des Fahrzeugs oder Roboters erkannt werden.

In einer weiteren Ausführungsform wird der Sensor für die Vermessung von Objekten in dem Überwachungsbereich eingesetzt. Über die Anzahl und den Abstand der von dem Objekt durchstoßenen Ebenen kann dessen Höhe, über die Entfernungen innerhalb einer Ebene zumindest bei kontrastreichen Objekten bekannter Abmessungen auch die sonstige Größe bestimmt werden.

Das erfindungsgemäße Verfahren kann beispielhaft, aber nicht abschließend, mit analogen Merkmalen fortgebildet werden, wie sie für den Sensor in den Unteransprüchen angegeben sind und zeigt dabei ähnliche Vorteile.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine dreidimensionale Schemadarstellung einer Ausführungsform des erfindungsgemäßen Mehrebenensensors;
- Fig.2: eine dreidimensionale Schemadarstellung zur Erläuterung eines einzelnen Flächenelements des Mehrebenensensors;
- Fig. 3: eine Innenansicht des Aufbaus des Mehrebenensensors von schräg vorn;
- Fig. 4: eine erläuternde Darstellung zum Einlernen der Lichtempfangselemente der empfangenden Zeile eines Bildsensors;
- Fig. 5a: eine Darstellung der Empfangsoptik eines Bildsensors mit einer gemeinsamen Linse;
- Fig. 5b: eine Darstellung der Empfangsoptik eines Bildsensors mit einer Mikrooptik;
- Fig. 6: eine dreidimensionale Schemadarstellung des Mehrebenensensors mit Entfernungsmessung durch Triangulation;
- Fig. 7: eine dreidimensionale Schemadarstellung des Mehrebenensensors mit Entfernungsmessung durch Lichtlaufzeitverfahren;
- Fig. 8: eine dreidimensionale Schemadarstellung des Mehrebenensensors mit Höchstabstand für den Überwachungsbereich;
- Fig. 9: eine Draufsicht auf eine Ebene mit einem Warnbereich und einem Schutzbereich zur Erläuterung der Abstandsbedingungen;
- Fig. 10a: eine Darstellung zur Erläuterung der Erweiterung des Sichtwinkels durch zwei Bildsensoren;
- Fig. 10b: eine Darstellung zur Erläuterung der Erweiterung des Sichtwinkels durch mehrere Bildsensoren auf 360°;
- Fig.11a: eine Darstellung eines Mehrebenensensors mit fächerförmig angeordneten Ebenen;
- Fig. 11b: eine Darstellung eines Mehrebenensensors mit auf einer Kurve angeordneten Bildsensoren und parallelen Ebenen;
- Fig. 11c: eine Darstellung eines Mehrebenensensors mit auf einer Kurve angeordneten Bildsensoren und fächerförmig angeordneten Ebenen;
- Fig. 12: eine Darstellung eines käfigartigen, quaderförmigen Schutzfeldes;
- Fig. 13: eine Darstellung der senkrechten Anbringung des Mehrebenensensors an einem Fahrzeug; und
- Fig. 14: eine Darstellung zur Erläuterung der Verwendung des Mehrebenensensors für die Vermessung von Objekten.

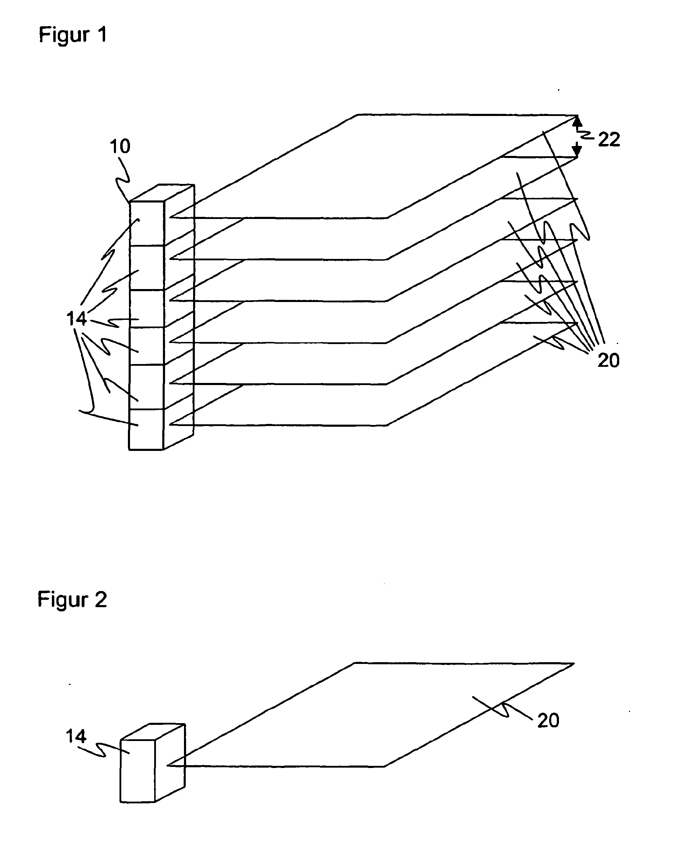

Figur 1 zeigt den grundsätzlichen Aufbau einer Ausführungsform eines erfindungsgemäßen Mehrebenensensors 10. Ein Raumbereich 12 wird von dem Mehrebenensensor 10 dadurch überwacht, dass eine Vielzahl von Überwachungsebenen 20 in den Raumbereich 12 gelegt wird und jede dieser Ebenen 20 von einem eigenen, an sich bekannten Flächen- oder Ebenensensor 14 überwacht wird. Als Mehrzahl von Ebenen 20 genügen im Prinzip zwei Ebenen, jedoch erhöht sich die Genauigkeit der Objekterfassung, wenn eine größere Anzahl vorgesehen ist. In der dargestellten Ausführungsform ist der Raumbereich 12 ein Quader oder ein Würfel und die Ebenen sind parallel zueinander in einem regelmäßigen Abstand 22 angeordnet. Sie wirken damit wie ein räumliches Lichtgitter.

Der Abstand 22 der Ebenen 20 untereinander ist entsprechend der zu detektierenden Objektgröße gewählt. Der Abstand 22 kann etwa 7-10 mm zur Detektion von Fingern, 10-20 mm zu Detektion von Extremitäten oder 30-80 mm zur Detektion der unteren Extremitäten eines menschlichen Körpers betragen. Natürlich sind andere Abstände zur Detektion anderer Objekte denkbar. Die Höchstgröße für den Abstand 22 hängt in der Sicherheitstechnik von der Sicherheitsklasse ab. Es sind Anwendungen denkbar, bei denen der Abstand 22 nicht regelmäßig ist. So könnte etwa in einer Arbeitshöhe, in der normalerweise mit den Händen gearbeitet wird, ein deutlich feinerer Abstand 22 vorgesehen sein als in Bodennähe, wo nur mit Füßen gerechnet werden muss. Auch könnte der Abstand 22 mit der Nähe zu einer Gefahrenquelle feiner werden.

Die Figur 2 illustriert einen einzelnen Flächensensor 14, aus denen der Mehrebenensensor 10 aufgebaut ist und die von ihm überwachte Ebene 20. Ein solcher Flächensensor 14, der eine Ebene 20 beobachtet und innerhalb dieser Ebene 20 ein definiertes Schutzfeld auf Verletzung überwacht beziehungsweise die Position eines Objektes in dieser Ebene feststellen kann, ist bereits bekannt und kann verhältnismäßig kostengünstig hergestellt werden.

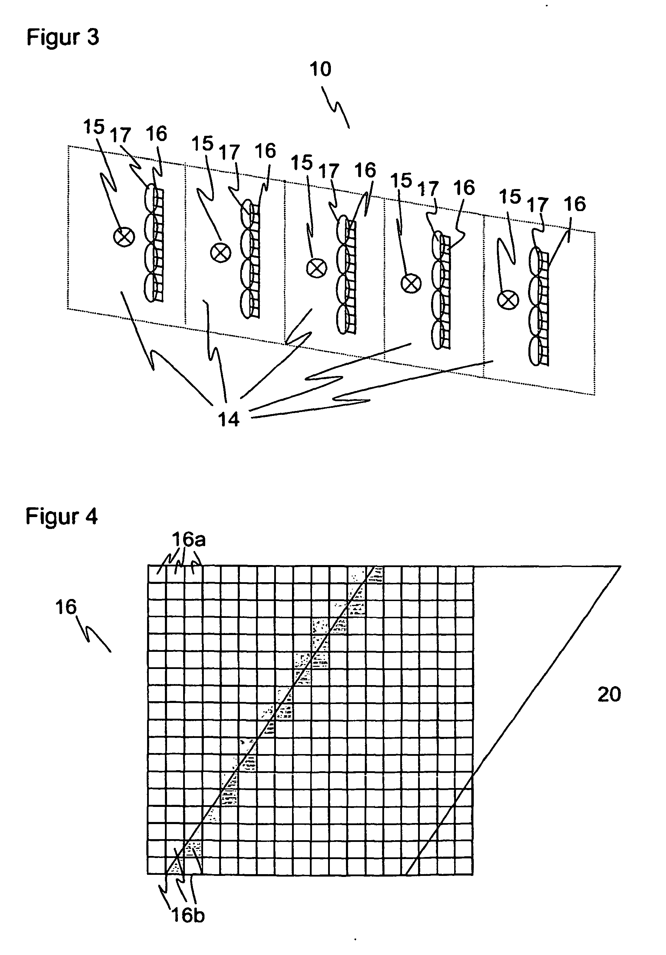

Figur 3 stellt den inneren Aufbau des Mehrebenensensors 10 in einer Ansicht von schräg vorne dar. Jeder Flächensensor 14, aus dem der Mehrebenensensor 10 aufgebaut ist, weist eine Beleuchtung 15 und einen Bildsensor 16 mit einer zugeordneten Optik 17 auf. Die Lichtquelle in der Beleuchtung 15 ist ein Laser oder eine LED. Um die Ebene 20 vollständig auszuleuchten, kann auch eine Reihe von LEDs oder ein Laserstack vorgesehen sein. Das Licht kann weiterhin mithilfe eines diffraktiven optischen Elements in die Ebene 20 auseinander gezogen werden. Die Beleuchtung 15 gibt je nach Anwendung sichtbares, ultraviolettes oder infrarotes Licht ab. Dabei hat sichtbares Licht den Vorteil, dass die überwachte Ebene 20 von Bedienpersonal erkannt werden kann, wohingegen infrarotes oder ultraviolettes Licht Bedienpersonal nicht stört, das in dem Überwachungsbereich 12 arbeitet.

Der Bildsensor 16 ist ein CCD- oder CMOS-Chip, der zeilenförmig in der Ebene 20 liegt. Diese Zeile liegt, wenn der Sichtwinkel des Flächensensors 14 beispielsweise 90° beträgt, unter einem 45°-Winkel, allgemein also bevorzugt unter dem halben Sichtwinkel, in der Ebene 20. Der Bildsensor 16 weist eine Vielzahl von nebeneinander liegenden Lichtempfangselementen auf, die somit in einem zeilenförmigen Pixelbild die Ebene 20 abbilden.

Als Bildsensor 16 kann auch ein doppelter Bildsensor zur stereoskopischen Aufnahme der Ebene 20 verstanden werden. Dazu liegen beispielsweise zwei zeilenförmige Bildsensoren nebeneinander in der Ebene 20, nehmen diese somit unter versetztem Blickwinkel auf und bilden gemeinsam den Bildsensor 16. Das stereoskopische Bild der Ebene 20, das die beiden Bildsensoren dann aufnehmen, kann in dieser Ausführungsform als entfernungsaufgelöstes Bild ausgewertet werden. Weiter unten werden noch weitere alternative Verfahren zur Entfernungsbestimmung beschrieben.

Der Bildsensor 16 kann unmittelbar als ein zeilenförmiger, vorzugsweise integrierter, Chip hergestellt sein. Figur 4 zeigt eine Alternative mit einem matrixförmigen Chip als Bildsensor 16. Grundsätzlich ist es möglich, mit einem derartigen matrixförmigen Bildsensor 16 nicht nur eine Ebene 20, sondern eine Scheibe endlicher Dicke des Überwachungsbereichs 12 zu betrachten. Es kann aber auch, wie nunmehr anhand der Figur 4 erläutert werden soll, lediglich eine Zeile des matrixförmigen Bildsensors 16 aktiv geschaltet sein, so dass die übrigen Lichtempfangselemente 16a oder Pixel im Betrieb unbenutzt bleiben. Da das Herstellungsverfahren für einen zeilenförmigen und einen matrixförmigen Chip nahezu identisch ist, werden für einen Bildsensor 16 mit mehreren Zeilen statt einer einzelnen Zeile kaum höhere Kosten verursacht.

Um die als aktiv auszuwählenden Lichtempfangselemente 16b aufzufinden, wird der Bildsensor 16 in seiner Empfangsebene 20 beleuchtet. Somit kann festgestellt werden, welche Lichtempfangselemente 16b in der Ebene 20 liegen. Da diese Linie in der Figur 4 dargestellt einen recht irregulären Verlauf über die Matrix des Bildsensors 16 nehmen kann und somit die Auswertung erschwert, könnte ein Justiervorgang zumindest eine rechtwinklige Lage des Bildsensors 16 sicherstellen. Das ist relativ leicht zu bewerkstelligen, weil die Bildsensoren 16 innerhalb des Mehrebenensensors 10 entsprechend ausgerichtet sind und eine rechtwinklige Lage des Mehrebenensensors 10 zu der Ebene 20 durch ein entsprechend regelmäßiges Gehäuse des Mehrebenensensors 10 sichergestellt ist. Nach einer solchen Grobjustierung liegen die aktiven Lichtempfangselemente 16b in einer Zeile oder einer Spalte des matrixförmigen Chips. Statt der Auswahl einer einzigen Linie ist analog auch die Auswahl mehrerer nebeneinanderliegender Zeilen zur Überwachung der Ebene 20 denkbar.

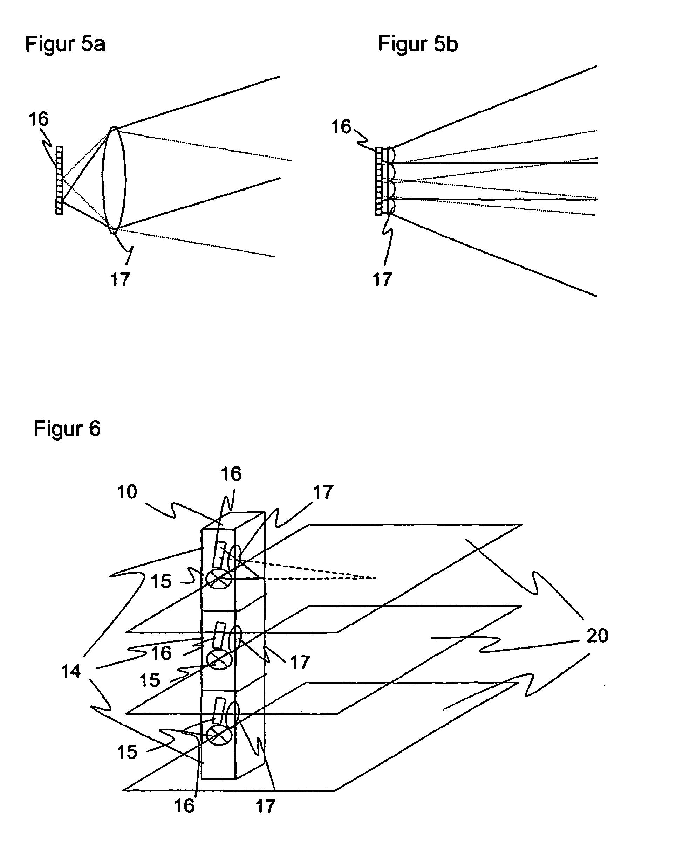

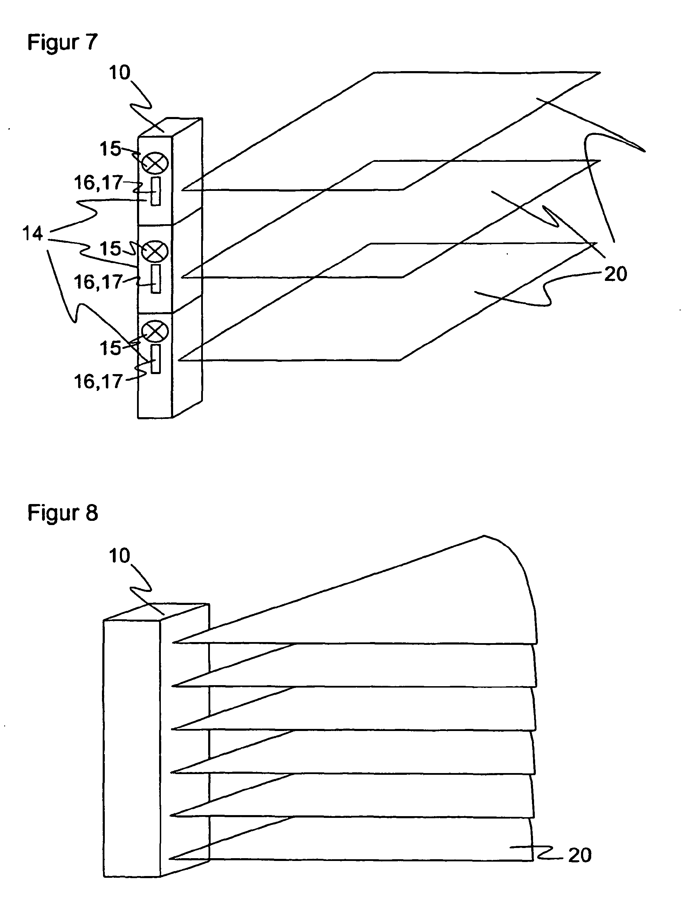

Die Lichtempfangselemente des Bildsensors 16 können farbige Bildwerte, Grauwerte und/oder Entfernungssignale bestimmen. Ein Verfahren zur Entfernungsbestimmung wird weiter unten im Zusammenhang mit den Figuren 6 und 7 beschrieben. Im Falle der Entfernungsbestimmung kann die notwendige Auswertung etwa in Form eines ASICs direkt dem einzelnen Lichtempfangselement zugeordnet sein ("intelligente Pixel").

In Figur 5a ist ein Bildsensor 16 dargestellt, dem eine Linse als Optik 17 zugeordnet ist. Die durchgezogenen beziehungsweise die gestrichelten Linien zeigen, auf welchem Lichtempfangselement oder Pixel Licht aus verschiedenen Richtungen empfangen wird. Die Linse hat einen recht großen Fangbereich und gibt deshalb eine verhältnismäßig hohe Lichtmenge an die Pixel ab, auf die sie abbildet. Mit anderen Worten, eine gemeinsame Linse 17 hat eine gute Energiebilanz und damit Helligkeitsauflösung.

In Figur 5b ist dem Bildsensor 16 dagegen eine Mikrooptik 17 ("Facettenauge") zugeordnet. Auch hier zeigen die durchgezogenen beziehungsweise die gestrichelten Linien den jeweiligen Fangbereich an. Jede Linse der Mikrooptik 17 gibt weniger Licht weiter als im Falle der gemeinsamen Linse, so dass die Helligkeitsauflösung etwas schlechter ist. Der Vorteil einer Mikrooptik 17 ist, dass sie wesentlich dichter an den Bildsensor 16 herangesetzt werden kann und auch an sich kleiner ist. Damit ist eine wesentlich kompaktere Bauweise möglich.

Die Optik 17 kann aus Glas bestehen. Sie kann aber auch aus Kunststoff gegossen und unmittelbar mit dem zugehörigen Bildsensor 16 als ein Modul hergestellt werden. Die Module aus den Bildsensoren 16 mit ihrer zugeordneten Optik 17 und gegebenenfalls der Beleuchtung 15 können auf einem gemeinsamen Baugruppenträger oder einer Platine montiert sein. Ist dann auch noch eine gemeinsame Stromversorgung für alle Module vorgesehen, so stellt diese Platine dann, in ein geeignetes Gehäuse eingesetzt, bereits den gesamten Mehrebenensensor 10 dar.

Dabei ist den Modulen 16, 17 bevorzugt eine gemeinsame Steuerung zugeordnet. Die gemeinsame Steuerung kann eine Objekterfassung mehrerer Bildsensoren 16 in unterschiedlichen Ebenen 20 zusammenfassen und auf diese Weise Objekte als gefährlich oder ungefährlich klassifizieren ("intelligentes Muting"). Ungefährlich könnte beispielsweise ein Objekt sein, dass in bekannter Weise Ebenen 20 durchbricht, wie eine durchfahrende Palette. Auf ähnliche Weise kann auch die Lage von Objekten zueinander ausgewertet werden und Bedienpersonal an seinem Arbeitsplatz neben einem Roboter bei bekanntem Abstand ungefährlich sein, bei sich verringerndem Abstand aber als gefährlich klassifiziert werden ("kooperativer Arbeitsplatz").

In einigen Anwendungen kann ein farbiges oder ein Grauwertbild ausreichend sein. Eine größere Vielfalt an Anwendungen ergibt sich, wenn neben den Grauwerten auch die Entfernungen gemessen werden. Der Bildsensor 16 kann für solche Ausführungsformen der Erfindung die Entfernungen mithilfe eines Lichtlaufzeitverfahrens bestimmen.

Hierzu ist in Figur 6 der Aufbau des Mehrebenensensors 10 mit triangulierenden Flächensensoren 14 gezeigt. Für die Triangulation wird die zu beobachtende Ebene 20 von der Beleuchtung 15 mit einem strukturierten Beleuchtungsmuster oder einer einfachen Beleuchtungslinie ausgeleuchtet. Dies kann beispielsweise mithilfe eines vorgeschalteten diffraktiven optischen Elements geschehen oder, im Falle der Beleuchtungslinie, als Laserlinie mit einem bewegten Laser oder einem bewegten Spiegel(rad). Der Bildsensor 16 ist versetzt zu der Beleuchtung 15 angeordnet und schräg gestellt. Wie die Beispiele zweier Lichtstrahlen 18a, 18b aus unterschiedlichen Entfernungen illustrieren, ist die Lage ihres von der Optik 17 auf dem Bildsensor 16 abgebildeten Bildes entfernungsabhängig: je weiter weg das remittierende Objekt ist (also je weiter rechts in Figur 6), desto weiter unten liegt das Bild auf dem Bildsensor 16 (also desto weiter unten in Figur 6).

Wie man unter Heranziehen der Darstellung in Figur 3 erkennt, liegt die Zeile des Bildsensors 16 in der Tiefenrichtung der Figur 6. Der Bildsensor 16 hat also eine Gestalt, die in Tiefenrichtung eine Zeile zur Abbildung verschiedener Bereiche in der Ebene 20 bildet und in einer Höhenrichtung gemäß Darstellung in Figur 6 ein oder mehrere Lichtempfangselemente für die Triangulation aufweist. Dafür können in Höhenrichtung jeweils mehrere Pixel oder auch beispielsweise eine differentielle Photodiode verwendet werden. In der Figur 6 dargestellt, ist für die Triangulation in einer Ausführungsform der Erfindung ein 180°-Sichtwinkel vorgesehen.

Alternativ können die Entfernungen, wie nunmehr anhand der Figur 7 erläutert, mit einem Lichtlaufzeitverfahren bestimmt werden. Hierbei ist der Aufbau insofern umgekehrt zu demjenigen bei der Triangulation, als nunmehr die Bildsensoren 16 in der zu beobachtenden Ebene 20 liegen und die Beleuchtungen 15 dagegen versetzt darüber oder darunter oder koplanar angeordnet sind. Wie die Triangulation sind auch Lichtlaufzeitverfahren an sich bekannt. Damit kann die Entfernung einerseits über die Laufzeit eines Lichtpulses oder alternativ über die Phasenlage von intensitätsmoduliertem Licht gemessen werden. Bei der ersten Alternative sendet eine nicht dargestellte Steuerung mittels der Beleuchtung 15 einen Lichtpuls aus und bestimmt die Laufzeit bis zu dessen Empfang im Bildsensor 16 und daraus über die Lichtgeschwindigkeit die Entfernungen. Bei der zweiten Alternative sendet die Beleuchtung 15 intensitätsmoduliertes Licht einer bekannten Phasenlage aus und bestimmt über die Phasenverschiebung beim Empfang im Bildsensor 16 die Entfernungen modulo der Phase.

Die Entfernungsmessung ermöglicht nun weitere Ausführungsformen der Erfindung. In Figur 8 ist ein Mehrebenensensor dargestellt, dessen Ebenen nur bis zu einem Mindestabstand berücksichtigt werden. Auf diese Weise entstehen Kreissegmente als überwachte Ebenen 20. Es ist klar, dass derartige Begrenzungen von Ebene zu Ebene und auch winkelabhängig innerhalb einer Ebene variiert werden können. Auf diese Weise lassen sich Überwachungsbereiche 12 von fast beliebiger Geometrie erzeugen, wie beispielsweise Kegel, Zylinder, Quader, Würfel und weitere. Da der Sichtwinkel gewöhnlich nicht 360° beträgt, entstehen nicht unbedingt Kegel und Zylinder, sondern nur Teilkegel und Teilzylinder als die entsprechenden Segmente innerhalb des Sichtwinkels.

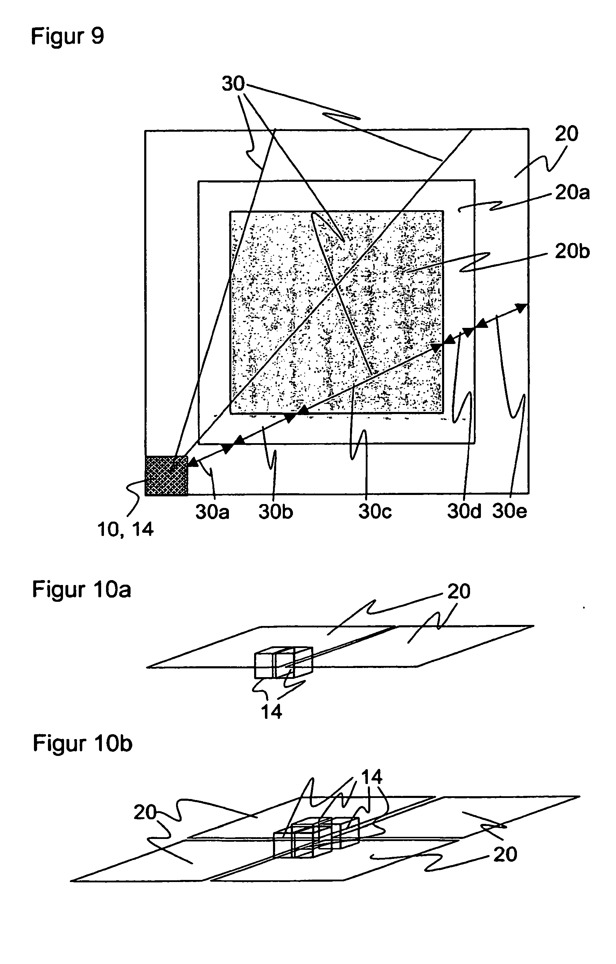

Anhand der Figur 9 wird erläutert, wie Abstandsbedingungen nicht nur die äußere Begrenzung des Überwachungsbereichs 12 festlegen, sondern auch Differenzierungen innerhalb des Raumbereichs 12 erlauben. Dargestellt ist ein Flächensensor 14 mit der zugeordneten beobachteten Ebene 20 in der Draufsicht. In dieser Ebene 20 wird ein Warnbereich 20a und ein Schutzbereich 20b definiert. Dies dient dazu, dass der Mehrebenensensor 10 einen Objekteingriff in den Raumbereich 12 akzeptiert, solange der Warnbereich 20a oder der Schutzbereich 20b nicht verletzt ist. Dringt ein Objekt in den Warnbereich 20a ein, so reagiert der Mehrebenensensor 10 mit einer ersten Eskalationsstufe, die beispielsweise ein einfaches Warnsignal wie ein Ton oder ein Alarm sein kann. Dringt ein Objekt weiter in den Schutzbereich 20b ein, so reagiert der Mehrebenensensor 10, indem er eine Gefahrenquelle beseitigt, beispielsweise eine gefährliche Maschine abschaltet. Dieses zweistufige System dient unter anderem dazu, Totzeiten durch abgeschaltete Maschinen zu verringern, indem dem Bedienpersonal rechtzeitig eine Warnung gegeben wird.

Um den Warnbereich 20a und den Schutzbereich 20b zu erkennen, sind zu Sichtlinien 30 in verschiedenen Winkeln zugehörige Abstände 30a-e eingelernt. Der Mehrebenensensor 10 weiß somit, bei welcher Entfernung sich ein Objekt im Warnbereich 20a oder im Schutzbereich 20b befindet.

Die Abstandsbedingungen erlauben auch Ausblendungsbereiche, beispielsweise Orte, wo ein Objekt wie eine Palette oder ein Messkopf eindringen darf, ohne dass dies ein verletzender Objekteingriff ist. Solche Ausblendungsbereiche können sogar dynamisch sein, das heißt die Abstände sind zeitabhängig oder hängen von früher erkannten Objekten ab. Auf diese Weise können langsam fahrende Objekte oder Objekte, die sich fern von Bedienpersonal aufhalten, als ungefährlich erkannt werden.

Die Figuren 10a und 10b zeigen eine weitere Variante der Erfindung. Die Flächensensoren 14 haben einen Sichtwinkel von 90°. Das muss selbstverständlich nicht so sein, ist aber geeignet für einen kubischen Überwachungsbereich 12 und ein größerer Sichtwinkel ist technisch nur mit erhöhtem Aufwand umsetzbar. Gemäß dieser Variante werden nun mehrere Bildsensoren 16 beziehungsweise die zugehörigen Flächensensoren 14 nebeneinander angeordnet, so dass sich ihre Sichtwinkel addieren. Bei einer gemeinsamen Auswertung entsteht dann effektiv ein Flächensensor 14 mit größerem Sichtwinkel. Figur 10a zeigt einen Flächensensor mit einem effektiven Sichtwinkel von 180° aus zwei Flächensensoren 14 und Figur 10b einen Flächensensor mit einem effektiven Sichtwinkel von 360° aus vier Flächensensoren 14.

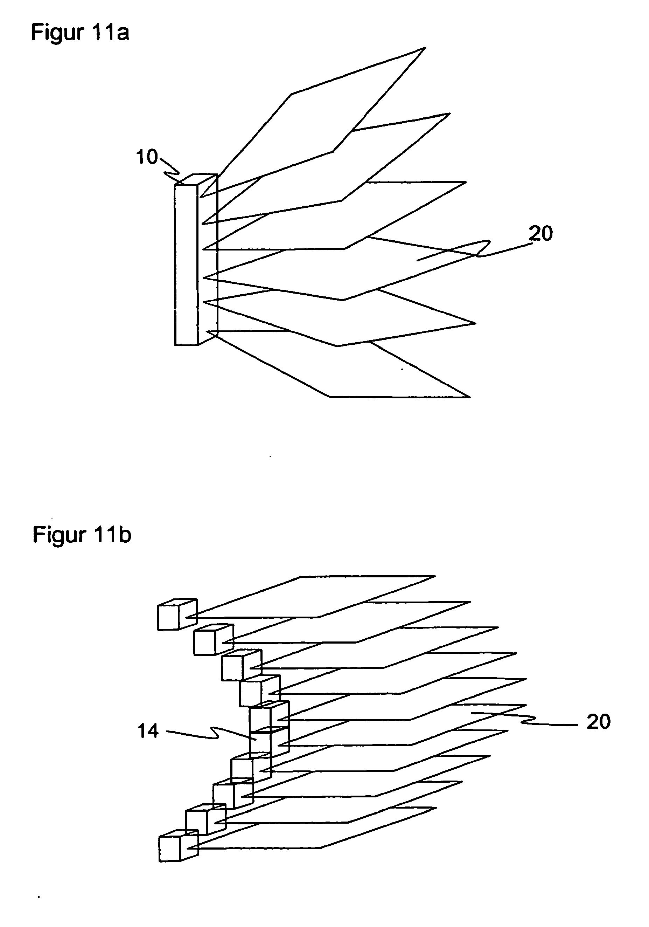

Bei den bisherigen Ausführungsformen lagen die Ebenen 20 parallel zueinander und die Flächensensoren 14 auf einer gemeinsamen Geraden. Figur 11a zeigt eine Ausführungsform der Erfindung, bei der zwar die Flächensensoren 14 auf einer gemeinsamen Geraden liegen, die Ebenen 20 aber fächerförmig auseinander laufen. Der Ebenenabstand hängt hier natürlich von der Entfernung zum Mehrebenensensor 10 ab. Eine Sicherheitsklasse, das heißt ein garantierter Höchstabstand zwischen den Ebenen 20, ist dann nur noch bis zu einer gewissen Entfernung von dem Mehrebenensensor 10 erfüllt. Der Vorteil ist, dass große Hindernisse in größerer Entfernung früher erkannt werden können und die Feinheit der Objekterkennung dann mit zunehmender Nähe größer wird.

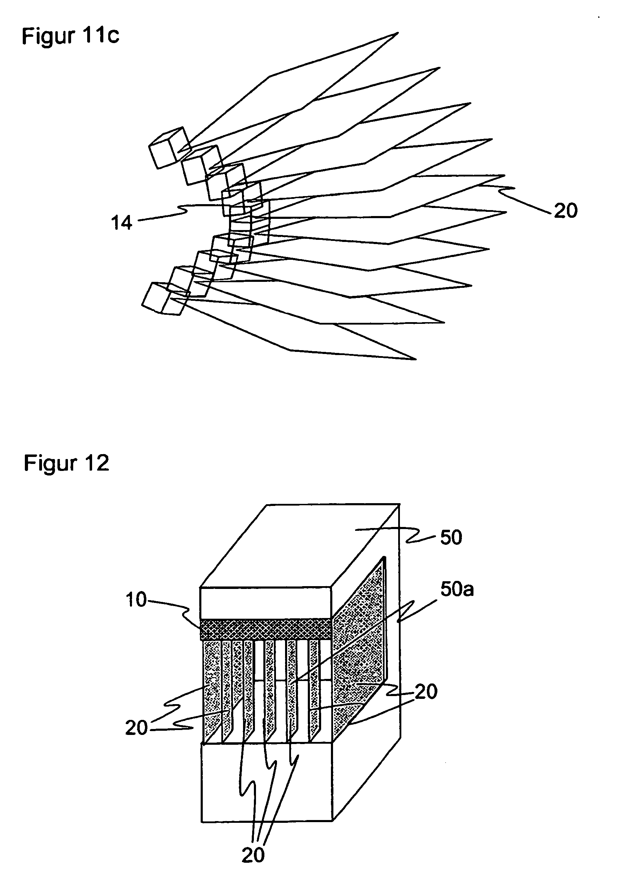

Figur 11b zeigt eine Anordnung mit zueinander paradierenden Ebenen 20, bei der aber die Flächensensoren 14 nicht auf einer Geraden, sondern einer Kurve angeordnet sind. Damit kann sich der Mehrebenensensor 10 an eine gekrümmte Oberfläche anschmiegen und somit beispielsweise an einem Fahrzeug dem Kollisionsschutz dienen ("elektrooptischer Bumper"). Figur 11c zeigt eine Mischform, bei der die Flächensensoren 14 auf einer Kurve liegen und die Ebenen 20 fächerförmig auseinander laufen. Dies kann an einem Fahrzeug dazu dienen, großflächige Hindernisse bereits auf große Entfernung zu erkennen.

Figur 12 zeigt eine besondere Ausführungsform der Erfindung, mittels derer eine gefährliche Maschine wie eine Abkantpresse 50 geschützt werden kann. Herkömmlich müsste der innere Bereich 50a der Abkantpresse 50 durch mehrere Lichtgitter geschützt werden, die jeweils an den Ecken des inneren Bereichs 50a angeordnet sind. Erfindungsgemäß ist nur ein Mehrebenensensor 10 vorgesehen, dessen Ebenen 20 so eingestellt sind, das sich insgesamt als Schutzfeld eine Art Käfig ergibt. Der große Vorteil dieser Anordnung ist, dass der gesamte innere Bereich 50a frei von hindernden Sensorbestandteilen ist. Gleichzeitig ließe sich auch die Position von Maschinen- oder Werkstückteilen ermitteln und das Schutzfeld in Abhängigkeit von deren Position oder Bewegung mittels der oben erläuterten Abstandsbedingungen verändern. Beim Einsatz einer Abkantpresse kann eine Überwachung auch beim Biegen von Kästen mit Seitenwänden erfolgen. Die käfigartige Konstruktion des Schutzbereichs kann entsprechend auch bei anderen äußeren Geometrien angewandt werden.

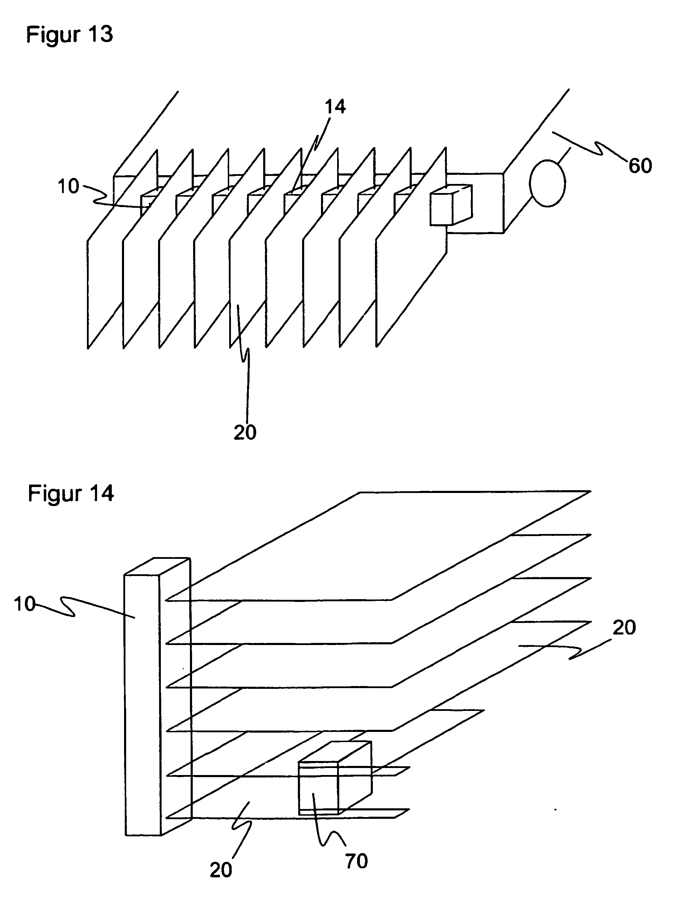

Figur 13 zeigt eine weitere Ausführungsform mit senkrecht angeordneten Ebenen 20 an einem Fahrzeug 60 (AGV, automated guided vehicle). Hierzu haben die Flächensensoren 14 vorteilhafterweise einen Sichtwinkel von 180°. Der entstehende Mehrebenensensor 10 eignet sich damit auch als Ersatz für einen mechanischen Bumper und erfasst einen dreidimensionalen Bereich vor dem Fahrzeug. Mit herkömmlichen Sensoren entstehen kritische Situationen beispielsweise durch seitlich in den Fahrweg reichende Regalteile, die von dem Flächensensor wie etwa einem Laserscanner nur in dessen Scanebene und damit längst nicht überall erfasst werden können.

Figur 14 zeigt eine weitere Ausführungsform der Erfindung zur Vermessung von Gegenständen. Die Höhe eines Gegenstand 70 kann durch Unterbrechung einer oder mehrerer Ebenen 20 bestimmt werden. Die weiteren Abmessungen können zumindest teilweise aus den Entfernungen ermittelt werden. Herkömmlich werden für eine Vermessung von Gegenständen etwa vor einem vertikalen Umlaufregal räumlich vorgelagerte und damit störende Lichtgitter verwendet.

Um die Funktionsfähigkeit des Mehrebenensensors 10 sicherzustellen, können kooperative Begrenzungen des Überwachungsbereichs 12 vorgesehen werden. Besonders geeignet hierfür sind Reflektoren oder Kontrastmuster. Solange deren Bild beziehungsweise Entfernung in den Bildsensoren 16 richtig erkannt wird, können die Bildsensoren 16 als funktionsfähig gelten. Wenn der Mehrebenensensor 10 einen freien Überwachungsbereich 12 überwacht, könnte ohne derartige kooperative Begrenzungen nicht überprüft werden, ob der Überwachungsbereich 12 weiterhin frei ist oder der Bildsensor 16 defekt.

Die beschriebenen Ausführungsformen sind beispielhaft zu verstehen. Die Erfindung umfasst insbesondere auch solche Ausführungsformen, bei denen beschriebene Merkmale anders kombiniert sind.

## Patentansprüche

1. Optoelektronischer Sensor (10) zur Erfassung von Objekten in einem dreidimensionalen überwachungsbereich (12) mit mindestens einem Bildsensor (16), der mittels einer Vielzahl von Lichtempfangselementen ein Pixelbild des Überwachungsbereichs (12) aufnehmen kann sowie mit mindestens einer Steuerung, die für die Erfassung eines Objekts aus Bilddaten des Pixelbildes ausgebildet ist, wobei eine Mehrzahl von Bildsensoren (16) vorgesehen ist, die jeweils mindestens eine Pixelzeile mit Lichtempfangselementen (16b) aufweisen und wobei die Bildsensoren (16) voneinander beabstandet angeordnet sind, so dass jeder Bildsensor (16) eine eigene Ebene (20) des Überwachungsbereichs (12) aufnehmen kann, **dadurch gekennzeichnet,**
**dass** die Steuerung für die Abgabe eines Abschaltsignals an eine Maschine in dem Überwachungsbereich (12) ausgebildet ist, wenn ein Schutzbereich verletzt ist,
wobei die Bildsensoren (16) so angeordnet sind, dass die Ebenen (20) untereinander überlappungsfrei und im Wesentlichen parallel zueinander sind oder voneinander fächerförmig von den Bildsensoren (16) ausgehend auseinanderlaufe und
**dass** je zwei parallele Ebenen (20)
voneinander höchstens um einen jeweiligen vorgegebenen Abstand (22) beabstandet sind, bzw. je zwei fächerförmig auseinanderlaufende Ebenen bis zu einer vorgegebenen Entfernung von dem Sensor höchstens um den vorgegebenen Abstand beabstandet sind, um eine Sicherheitsklasse zu erfüllen,
wobei der vorgegebene Abstand (22) 7-10 mm zur Detektion von Fingern, 10-20 mm zur Detektion von Extremitäten oder 30-80 mm zur Detektion der unteren Extremitäten eines menschlichen Körpers beträgt.

2. Sensor (10) nach Anspruch 1, wobei die Bildsensoren (16) auf einer Geraden oder einer Kurve aufgereiht angeordnet sind.

3. Sensor (10) nach Anspruch 1 oder 2, wobei jedem Bildsensor (16) eine Lichtquelle (15) zugeordnet ist, insbesondere ein Laser oder eine LED.

4. Sensor (10) nach Anspruch 3, wobei die Lichtquelle (15) eine Lichtquelle für sichtbares, infrarotes oder ultraviolettes Licht ist.

5. Sensor (10) nach einem der vorhergehenden Ansprüche, wobei die Bildsensoren (16) ein entfernungsaufgelöstes Pixelbild aufnehmen können.

6. Sensor (10) nach Anspruch 3 oder 4 und 5, wobei die Lichtquelle (15) dafür ausgebildet ist, in die Ebene (20) des zugehörigen Bildsensors (16) ein strukturiertes Beleuchtungsmuster oder eine Beleuchtungslinie zu strahlen, insbesondere mittels eines in den Strahlengang der Lichtquelle (15) eingebrachten diffraktiven optischen Elements, und wobei der Bildsensor (16) die Entfernungen mittels Triangulation bestimmen kann.

7. Sensor (10) nach Anspruch 3 oder 4 und 5, wobei die Lichtempfangselemente der Bildsensoren (16) die Entfernungen nach einem Lichtlaufzeitverfahren bestimmen können.

8. Sensor (10) nach Anspruch 7, wobei die Lichtquellen (15) Lichtpulse aussenden und die Lichtempfangselemente die Pulslaufzeit bestimmen können.

9. Sensor (10) nach Anspruch 7, wobei die Lichtquellen (15) ein intensitätsmoduliertes Licht aussenden und die Lichtempfangselemente dessen Phasenverschiebung bestimmen können.

10. Sensor (10) nach einem der Ansprüche 5 bis 9, wobei der Sensor (10) für die Überwachung eines Schutzbereichs (20b) ausgebildet ist, der Teilbereich des Überwachungsbereichs (12) ist, indem die Steuerung jeder Ebene (20) winkelabhängige Schutzbereich-Abstandsbedingungen (30a-30e) zuweist und ein erfasstes Objekt als den Schutzbereich (20b) verletzend erkennt, wenn es die Schutzbereich-Abstandsbedingungen (30a-30e) erfüllt.

11. Sensor (10) nach Anspruch 10, wobei der Sensor (10) für die Überwachung
eines Warnbereichs (20a) ausgebildet ist, der als Teilbereich des Überwachungsbereichs (12) den Schutzbereich (20b) umfasst, indem die Steuerung jeder Ebene (20) winkelabhängige Warnbereich-Abstandsbedingungen (30a-30e) zuweist und ein erfasstes Objekt als den Warnbereich (20a) verletzend erkennt, wenn es die Wambereich-Abstandsbedingungen (30a-30e) erfüllt.

12. Sensor (10) nach Anspruch 10 oder 11, wobei die Schutzbereich-Abstandsbedingungen (30a-30e) bzw. die Wambereich-Abstandsbedingungen (30a-30e) in mehreren oder allen Ebenen (20) in zumindest einem Winkelbereich gleich sind.

13. Sensor (10) nach Anspruch 10 oder 11, wobei der Schutzbereich (20b) bzw. der Warnbereich (20a) ein Würfel, ein Quader, ein Teilkegel, ein Teilzylinder oder ein würfelförmiger, quaderförmiger, teilkegelförmiger oder teilzylinderförmiger Käfig ist.

14. Sensor (10) nach einem der vorhergehenden Ansprüche, wobei jeder Bildsensor (16) einen Sichtwinkel von 90° hat.

15. Sensor (10) nach einem der vorhergehenden Ansprüche, wobei neben jedem Bildsensor (16) mindestens ein weiterer zugeordneter Bildsensor (16) derart angeordnet ist, dass sich die Sichtwinkel der einander zugeordneten Bildsensoren (16) addieren.

16. Sensor (10) nach einem der vorhergehenden Ansprüche, wobei jeder Bildsensor (16) einen CCD- oder einen CMOS-Chip mit mehreren Zeilen aufweist und in einer Einlernphase zur einfachen Justierung diejenige Zeile (16b) oder diejenigen Zeilen für den Betrieb ausgewählt werden können, welche die zugehörige Ebene (20) überwacht.

17. Sensor (10) nach einem der vorhergehenden Ansprüche, wobei den Lichtempfangselementen eines jeden Bildsensors (16) eine gemeinsame Optik (17) zugeordnet ist.

18. Sensor (10) nach einem der vorhergehenden Ansprüche, wobei Gruppen von Lichtempfangselementen jedes Bildsensors (16) eine Mikrooptik (17) zugeordnet ist und wobei Bildsensor (16) und Mikrooptiken (17) als ein Bauteil ein gemeinsames Modul bilden.

19. Sensor (10) nach einem der vorhergehenden Ansprüche, wobei mehrere Bildsensoren (16) oder mehrere gemeinsame Module auf einem gemeinsamen Baugruppenträger angeordnet sind.

20. Sensor (10) nach einem der vorhergehenden Ansprüche, wobei die Steuerung, die Bildsensoren (16) und die Lichtquellen (15) eine gemeinsame Energieversorgung aufweisen.

21. Sensor (10) nach einem der vorhergehenden Ansprüche, wobei eine gemeinsame Steuerung für mehrere oder für alle Bildsensoren (16) vorgesehen ist.

22. Sensor (10) nach Anspruch 21, wobei die gemeinsame Steuerung dafür ausgebildet ist, eine Objekterfassung durch mehrere Bildsensoren (16) in unterschiedlichen Ebenen (20) zu einer geometrischen Objektklassifizierung zusammenzufassen und nur bestimmte Objektklassen als Gefährdung zu werten.

23. Sensor (10) nach Anspruch 21 oder 22, wobei die gemeinsame Steuerung dafür ausgebildet ist, Objekterfassungen durch mehrere Bildsensoren (16) für eine Klassifizierung der Lage von Objekten zueinander sowie deren zeitliche Veränderung als Bewegung zusammenzufassen und bestimmte Objektlagen oder Bewegungen als Gefährdung zu werten.

24. Sensor (10) nach einem der vorhergehenden Ansprüche, wobei kooperative Begrenzungen des Überwachungsbereichs (12) vorgesehen sind und die Steuerung dafür ausgebildet ist, deren Bild bzw. Entfernung als Funktionstest der Bildsensoren (16) mit einem Referenzbild bzw. Referenzentfemungen zu vergfeichen.

25. Sensor nach Anspruch 11 zur Absicherung eines Gefahrenbereichs, wobei die Steuerung für die Abgabe eines Warnsignals ausgebildet ist, wenn der Warnbereich (20a) verletzt ist.

26. Sensor nach einem der vorhergehenden Ansprüche zur mobilen Verwendung an einem Fahrzeug (70) oder einem Roboter.

27. Sensor nach einem der vorhergehenden Anspruche zur Verwendung bei der Vermessung von Objekten (70) in dem Überwachungsbereich (12).

28. Verfahren zur Erfassung von Objekten in einem dreidimensionalen Überwachungsbereich (12) mit mindestens einem Bildsensor (16), der ein Pixelbild des Überwachungsbereichs (12) aufnimmt, wobei das Objekt mittels einer Auswertung der Bilddaten des Pixelbildes erfasst wird und wobei eine Mehrzahl von Ebenen (20) des Überwachungsbereichs (12) jeweils mit einem Bildsensor (16) aus einer Mehrzahl von Bildsensoren (16) aufgenommen wird, wobei die Ebenen (20) zumindest in dem Bereich, in dem die jeweiligen Bildsensoren (16) liegen, voneinander beabstandet sind,
**dadurch gekennzeichnet,**
**dass** ein Abschaltsignal an eine Maschine in dem Überwachungsbereich abgegeben wird, wenn ein Schutzbereich verletzt ist, wobei die Ebenen (20) untereinander überlappungsfrei und im Wesentlichen parallel zueinander sind oder voneinander fächerförmig von den Bildsensoren (16) ausgehend auseinanderlaufen und je zwei parallele Ebenen (20) voneinander höchstens um einen jeweiligen vorgegebenen Abstand (22) beabstandet sind, bzw. je zwei fächerförmig auseinanderlaufende Ebenen bis zu einer vorgegebenen Entfernung von dem Sensor höchstens um den vorgegebenen Abstand beabstandet sind, um eine Sicherheitsklasse zu erfüllen, wobei der vorgegebene Abstand (22) 7-10 mm zur Detektion von Fingern. 10-20 mm zur Detektion von Extremitäten oder 30-80 mm zur Detektion der unteren Extremitäten eines menschlichen Körpers beträgt.

## Claims

1. An optoelectronic sensor (10) for detecting an object in a three-dimensional monitored region (12) by at least one image sensor (16) that can take a pixel image of the monitored region (12) by means of a plurality of light-receiving elements and comprising at least one control unit configured to detect an object from image data of the pixel image, wherein a plurality of image sensors (16) is provided, each image sensor (16) including at least one pixel line formed by light-receiving elements (16b), and wherein the image sensors (16) are spaced from each other so that each image sensor (16) can monitor an associated plane (20) of the monitored region (12),
**characterized in that**
the control unit is configured to output a shutdown signal to a machine in the monitored region (12) when a protected zone is violated,
wherein the image sensors (16) are arranged so that the planes (20) are one of non-overlapping and substantially parallel to each other and angularly diverging from each other in a fan-like manner beginning at the image sensors (16), and so that two respective parallel planes (20) are spaced from each other by at most a predetermined distance (22) and two respective fan-like diverging planes (20) are spaced from each other by at most the predetermined distance (22) up to a given distance from the sensor (10) to satisfy a safety class, wherein the predetermined distance (22) is 7-10 mm for the detection of fingers, 10-20 mm for the detection of extremities, and 30-80 mm for the detection of lower extremities of a human body.

2. The sensor (10) according to claim 1,
wherein the image sensors (16) are arranged on one of a straight line and a curved line.

3. The sensor (10) according to claim 1 or 2,
wherein a light source (15) is assigned to each image sensor (16), in particular a laser or an LED.

4. The sensor (10) according to claim 3,
wherein the light source (15) is a light source for visible, infrared, or ultraviolet light.

5. The sensor (10) according to any of the preceding claims,
wherein the image sensors (16) are configured to generate a distance resolving pixel image.

6. The sensor (10) according to claim 3 or 4 and 5,
wherein the light source (15) is configured to generate a structured illumination pattern or an illumination line in the plane (20) of the associated image sensor (16), in particular by means of a diffractive optical element positioned in the light beam emitted by the light source (15), and wherein the image sensor (16) is configured to determine distances by triangulation.

7. The sensor (10) according to claim 3 or 4 and 5,
wherein the light-receiving elements of the image sensors (16) are configured to determine distances based on a light time of flight method.

8. The sensor (109) according to claim 7,
wherein the light sources (15) are able to emit light pulses and wherein the light-receiving elements are able to determine the pulse travel time.

9. The sensor (10) according to claim 7,
wherein the light sources (15) are able to generate intensity-modulated light and wherein the light-receiving elements are able to determine a phase shift thereof.

10. The sensor (10) according to any of claims 5 to 9,
wherein the sensor (10) is configured to monitor a protected zone (20b) which is part of the monitored region (12) by means of the control unit assigning angle-dependent protected zone distance conditions (30a-30e) for each plane (20) and recognizing a detected object as violating the protected zone (20b) when the object meets the protected zone distance conditions (30a-30e).

11. The sensor (10) according to claim 10,
wherein the sensor (10) is configured to monitor a warning zone (20a) which is part of the monitored region (12) and includes the protected zone (20b) by means of the control unit assigning angle-dependent warning zone distance conditions (30a-30e) for each plane and recognizing an object as violating the warning zone (20a) when the object meets the warning zone distance conditions (30a-30e).

12. The sensor (10) according to claim 10 or 11,
wherein the protected zone distance conditions (30a-30e) or the warning zone distance conditions (30a-30e), respectively, are the identical for several or all of the planes (20) in at least one angular range.

13. The sensor (10) according to claim 10 or 11,
wherein the protected zone (20b) or the warning zone (20a), respectively, is a cube, a rectangular block, a partial cone, a partial cylinder, or a cage being cube shaped, rectangular block shaped, partially cone shaped or partially cylinder shaped.

14. The sensor (10) according to any of the preceding claims,
wherein each image sensor (16) has a viewing angle of 90 degree.

15. The sensor (10) according to any of the preceding claims,
wherein at least one additional associated image sensor (16) is arranged next to each image sensor (16) so that the viewing angles of the image sensors (16) associated with each other add up.

16. The sensor (10) according to any of the preceding claims,
wherein each image sensor (16) includes a CCD chip or a CMOS chip with a plurality of lines and wherein the line (16b) or lines can be selected in an initial teaching phase for operation that monitor the associated plane (20).

17. The sensor (10) according to any of the preceding claims,
wherein the light-receiving elements of each image sensor (16) have a common optics (17).

18. The sensor (10) according to any of the preceding claims,
wherein groups of light-receiving elements of each image sensor (16) include micro optics (17), and wherein the image sensor (16) and the micro optics (17) form a common module as one element.

19. The sensor (10) according to any of the preceding claims,
wherein several image sensors (16) or several common modules are arranged on a common support carrier mounting.

20. The sensor (10) according to any of the preceding claims,
wherein the control unit, the image sensors (16) and the light sources (15) have a common power supply.

21. The sensor (10) according to any of the preceding claims,
wherein a common control unit for several or all image sensors (16) is provided.

22. The sensor (10) according to claim 21,
wherein the common control unit is configured to combine an object detection from several image sensors (16) in different planes (20) into a geometric object classification, and to assume only predetermined object classes as constituting danger.

23. The sensor (10) according to claim 21 or 22,
wherein the common control unit is configured to combine object detections of several image sensors (16) for a classification of the position of objects with respect to one another as well as changes thereof over time as movements and to assume predetermined object positions or movements as constituting danger.

24. The sensor (10) according to any of the preceding claims,
wherein cooperative boundaries of the monitored region (12) are provided, and wherein the control unit is configured to compare an image or the distances of the boundaries with a reference image or reference distances, respectively, to check the functionality of the image sensors (16).

25. The sensor (10) according to claim 11 for securing a dangerous zone, wherein the control unit is configured to output a warning signal when the warning zone (20a) is violated.

26. The sensor (10) according to any of the preceding claims for mobile use on a vehicle (70) or on a robot.

27. The sensor (10) according to any of the preceding claims for use in measurement of object dimensions in the monitored region (12).

28. A method for detecting an object in a three-dimensional monitored region (12) with at least one image sensor (16) taking a picture image of the monitored region (12), wherein the object is detected by an evaluation of the image data of the pixel image, wherein a plurality of planes (20) of the monitored region (12) is captured by one image sensors (16) of a plurality of image sensors (16), wherein the planes (20) are spaced from each other at least in the region where the respective image sensors (16) are positioned,
**characterized in that**
a shutdown signal is output to a machine in the monitored region (12) when a protected zone (20b) is violated, wherein the planes (20) are one of mutually non-overlapping and substantially parallel and angularly diverging from each other in a fan-like manner beginning at the image sensors (16), and wherein two respective parallel planes (20) are spaced from each other by at most a predetermined distance (22) and two respective fan-like diverging planes (20) are spaced from each other by at most the predetermined distance (22) up to a given distance from the sensor (10) to satisfy a safety class, wherein the predetermined distance (22) is 7-10 mm for the detection of fingers, 10-20 mm for the detection of extremities, and 30-80 mm for the detection of lower extremities of a human body.

## Revendications

1. Capteur optoélectronique (10) pour la détection d'objets dans une zone de surveillance tridimensionnelle (12) comprenant au moins un capteur d'images (16) qui, au moyen d'une pluralité d'éléments récepteurs de lumière, est capable de prendre une image en pixels de la zone de surveillance (12), et comprenant au moins une commande qui est réalisée pour la détermination d'un objet à partir des données image de l'image en pixels, dans lequel est prévue une pluralité de capteurs d'images (16) qui comprennent chacun au moins une ligne de pixels avec des éléments récepteurs de lumière (16b), de telle manière que les capteurs d'images (16) sont agencés à distance les uns des autres de façon que chaque capteur d'images (16) est capable de prendre une image d'un propre plan (20) de la zone de surveillance (12), **caractérisé en ce que**
la commande est réalisée pour délivrer un signal de coupure à une machine dans la zone de surveillance (12) s'il y a violation d'une zone de protection,
dans lequel les capteurs d'images (16) sont agencés de telle manière que les plans (20) sont sans chevauchement les uns par rapport aux autres et sont sensiblement parallèles les uns aux autres ou bien divergents les uns par rapport aux autres en éventail en partant des capteurs d'images (16), et
**en ce que** deux plans parallèles respectifs (20) sont écartés l'un de l'autre au maximum d'une distance respective prédéterminée (22) ou respectivement que deux plans respectivement divergents en éventail sont écartés, jusqu'à un éloignement prédéterminé depuis le capteur, au maximum de la distance prédéterminée, afin de satisfaire à une classe de sécurité,
dans lequel la distance prédéterminée (22) s'élève de 7 à 10 mm pour la détection de doigts, de 10 à 20 mm pour la détection d'extrémités ou de 30 à 80 mm pour la détection des extrémités inférieures d'un corps humain.

2. Capteur (10) selon la revendication 1, dans lequel les capteurs d'images (16) sont agencés en une rangée sur une droite ou sur une courbe.

3. Capteur (10) selon la revendication 1 ou 2, dans lequel une source de lumière (15) est associée à chaque capteur d'images (16), en particulier un laser ou une diode électroluminescente.

4. Capteur (10) selon la revendication 3, dans lequel la source de lumière (15) est une source de lumière pour de la lumière visible, infrarouge ou ultraviolette.

5. Capteur (10) selon l'une des revendications précédentes, dans lequel les capteurs d'images (16) sont capables de prendre une image en pixels à résolution d'éloignement.

6. Capteur (10) selon la revendication 3 ou 4 et 5, dans lequel la source de lumière (15) est réalisée pour illuminer, dans le plan (20) du capteur d'image associée (16), un motif d'éclairage structuré ou une ligne d'éclairage, en particulier au moyen d'un élément optique à diffraction introduit dans le trajet des rayons de la source de lumière (15), et dans lequel le capteur d'images (16) peut déterminer les éloignements au moyen d'une triangulation.

7. Capteur (10) selon la revendication 3 ou 4 et 5, dans lequel les éléments récepteurs de lumière des capteurs d'images (16) peuvent déterminer les éloignements selon une procédure de temps de parcours de la lumière.

8. Capteur (10) selon la revendication 7, dans lequel les sources de lumière (15) émettent des impulsions de lumière et les éléments de réception de lumière peuvent déterminer le temps de parcours des impulsions.

9. Capteur (10) selon la revendication 7, dans lequel les sources de lumière (15) émettent une lumière modulée en intensité, et les éléments récepteurs de lumière peuvent déterminer son décalage de phase.

10. Capteur (10) selon l'une des revendications 5 à 9, dans lequel le capteur (10) est réalisé pour la surveillance d'une zone de protection (20b) qui est une région partielle de la zone de surveillance (12), en ce que la commande attribue à chaque plan (20) des conditions de distance vis-à-vis de la zone de protection (30a-30e) avec fonction angulaire, et reconnaît un objet détecté comme une violation de la zone de protection (20b) s'il satisfait les conditions de distance vis-à-vis de la zone de protection (30a-30e).

11. Capteur (10) selon la revendication 10, dans lequel le capteur (10) est réalisé pour la surveillance d'une zone d'avertissement (20a) qui englobe, à titre de zone partielle de la zone de surveillance (12), la zone de protection (20b), en ce que la commande attribue à chaque plan (20) des conditions de distance vis-à-vis de la zone d'avertissement (30a-30e) avec fonction angulaire, et reconnaît un objet détecté comme une violation de la zone d'avertissement (20a) s'il satisfait les conditions de distance vis-à-vis de la zone d'avertissement (30a-30e).

12. Capteur (10) selon la revendication 10 ou 11, dans lequel les conditions de distance (30a-30e) vis-à-vis de la zone de protection ou les conditions de distance (30a-30e) vis-à-vis de la zone d'avertissement sont égales, dans plusieurs plans ou dans tous les plans (20), dans au moins une plage angulaire.

13. Capteur (10) selon la revendication 10 ou 11, dans lequel la zone de protection (20a) ou la zone d'avertissement (20a) est un parallélépipède, un cube, un tronc de cône, un tronc de cylindre ou une cage en forme de parallélépipède, de cube, de tronc de cône ou de tronc de cylindre.

14. Capteur (10) selon l'une des revendications précédentes, dans lequel chaque capteur d'images (16) possède un angle de vision de 90°

15. Capteur (10) selon l'une des revendications précédentes, dans lequel au moins un autre capteur d'images associé (16) est agencé à côté de chaque capteur d'images (16) de telle façon que les angles de vision des capteurs d'images (16) mutuellement associés s'additionnent.

16. Capteur (10) selon l'une des revendications précédentes, dans lequel chaque capteur d'images (16) comprend une puce à CCD ou une puce CMOS avec plusieurs lignes et, dans une phase d'apprentissage pour simplifier l'ajustement, il est possible de choisir pour le fonctionnement la ligne (16b) ou les lignes qui surveille(nt) le plan associé (20).

17. Capteur (10) selon l'une des revendications précédentes, dans lequel une optique commune (17) est associée aux éléments récepteurs de lumière de chaque capteur d'image (16).

18. Capteur (10) selon l'une des revendications précédentes, dans lequel une microoptique (17) est associée à des groupes d'éléments récepteurs de lumière de chaque capteur d'images (16), et dans lequel le capteur d'images (16) et les microoptiques (17) forment, à titre d'éléments constitutifs, un module commun.

19. Capteur (10) selon l'une des revendications précédentes, dans lequel plusieurs capteurs d'images (16) ou plusieurs modules communs sont agencés sur un support de groupe structurel commun.

20. Capteur (10) selon l'une des revendications précédentes, dans lequel la commande, les capteurs d'images (16) et les sources de lumière (15) comportent une alimentation en énergie commune.

21. Capteur (10) selon l'une des revendications précédentes, dans lequel il est prévu une commande commune pour plusieurs capteurs d'images ou pour tous les capteurs d'images (16).

22. Capteur (10) selon la revendication 21, dans lequel la commande commune est réalisée pour regrouper une détection d'objets par plusieurs capteurs d'images (16) dans des plans différents (20) pour donner une classification d'objet géométrique et pour évaluer comme une menace uniquement certaines classes d'objets.

23. Capteur (10) selon la revendication 21 ou 22, dans lequel la commande commune est réalisée pour regrouper des détections d'objets par plusieurs capteurs d'images (16) pour une classification de la position d'objets les uns par rapport aux autres ainsi que leurs modifications temporelles à titre de déplacement, et pour évaluer comme une menace certaines positions d'objets ou déplacements.

24. Capteur (10) selon l'une des revendications précédentes, dans lequel sont prévues des limitations coopératives de la zone de surveillance (12), et la commande est réalisée pour comparer leur image ou leur éloignement avec une image de référence ou avec des éloignements de référence, à titre de test fonctionnel des capteurs d'images (16).

25. Capteur selon la revendication 11 pour la sécurisation d'une zone à risque, dans lequel la commande est réalisée pour délivrer un signal d'avertissement s'il y a violation de la zone de surveillance (20a).

26. Capteur selon l'une des revendications précédentes pour l'utilisation mobile sur un véhicule (70) ou sur un robot.

27. Capteur selon l'une des revendications précédentes pour l'utilisation lors de la mesure d'objets (70) dans la zone de surveillance (12).

28. Procédé pour la détection d'objets dans une zone de surveillance tridimensionnelle (12) avec au moins un capteur d'images (16) qui prend une image en pixels de la zone de surveillance (12), dans lequel l'objet est détecté au moyen d'une évaluation des données image de l'image en pixels, dans lequel on prend une image d'une pluralité de plans (12) de la zone de surveillance (12) respectivement avec un capteur d'images (16) d'une pluralité de capteurs d'images (16), et les plans (20) sont écartés les uns des autres, au moins dans la région dans laquelle sont situés les capteurs d'images (16) respectifs,
**caractérisé en ce que** l'on délivre un signal de coupure à une machine dans la zone de surveillance quand il y a violation d'une zone de protection, les plans (20) étant sans chevauchement les uns par rapport aux autres et étant sensiblement parallèles les uns aux autres ou divergeant les uns des autres en éventail en partant des capteurs d'images (16), et deux plans parallèles respectifs (20) sont écartés l'un de l'autre au maximum d'une distance respective prédéterminée (22) ou bien deux plans divergents en éventail sont écartés, jusqu'à un éloignement prédéterminé depuis le capteur, au maximum de la distance prédéterminée, afin de satisfaire une classe de sécurité, et la distance prédéterminée (22) s'élève à 7 à 10 mm pour la détection de doigts, 10 à 20 mm pour la détection d'extrémités, ou 30 à 80 mm pour la détection des extrémités inférieures d'un corps humain.
